# EUROPEAN PATENT APPLICATION

(11) **EP 4 550 507 A1**
(43) Date of publication of application: **07.05.2025**
(21) Application number: 23850391.6
(22) Date of filing: 01.08.2023
(51) Int. Cl.: H01M 10/0567, H01M 10/052

(54) **NON-AQUEOUS ELECTROLYTE, AND LITHIUM SECONDARY BATTERY COMPRISING SAME**

(30) Priority: 01.08.2022 KR 20220095710
(71) Applicant: LG Energy Solution, Ltd., Seoul 07335 (KR)
(72) Inventor: YEOM, Chul Eun, Daejeon 34122 (KR); LEE, Chul Haeng, Daejeon 34122 (KR); LEE, Kyung Mi, Daejeon 34122 (KR); LEE, Jung Min, Daejeon 34122 (KR); JI, Su Hyeon, Daejeon 34122 (KR); HAN, Jung Gu, Daejeon 34122 (KR); CHO, Yoon Gyo, Daejeon 34122 (KR)
(74) Representative: Hoffmann Eitle
(86) International application number: PCT/KR2023/011228
(87) International publication number: WO 2024/029890

(57) **Abstract**

The present invention provides a non-aqueous electrolyte characterized by comprising: a lithium salt; an organic solvent; and an additive, wherein the additive includes a compound represented by a specific chemical formula. The non-aqueous electrolyte according to the present invention can suppress the deterioration of a positive electrode, reduce side reactions between the positive electrode and the electrolyte, and form a stable SEI film on a negative electrode, and thus can improve the high-temperature cycle characteristics and high-temperature storage characteristics of a lithium secondary battery comprising the non-aqueous electrolyte.

## Description

### TECHNICAL FIELD

### Cross-reference to Related Applications

This application claims priority from Korean Patent Application No. 10-2022-0095710, filed on August 1, 2022, the disclosures of which are incorporated by reference herein.

### Technical Field

The present disclosure relates to a non-aqueous electrolyte and a lithium secondary battery comprising the same.

### BACKGROUND ART

Recently, there is a growing demand for high-capacity, high-output and high-stability secondary batteries as the application area of lithium secondary batteries has rapidly expanded to power supply of electronic equipment such as electrical devices, electronic devices, communication devices, and computers, as well as power storage supply of large-area devices such as automobiles and power storage devices.

In particular, high capacity, high output, and long life characteristics are becoming important in lithium secondary batteries for automotive applications. In order to achieve the high capacity of the lithium secondary battery, it may be considered using a high-Ni positive electrode active material having a high energy density but low stability, or driving lithium secondary batteries at a high voltage.

However, in the case of driving a lithium secondary battery under the above conditions, as charging and discharging proceeds, the film formed on the positive/negative electrode surface or the electrode surface structure deteriorates due to the side reactions caused by the deterioration of the electrolyte, and the transition metal ions from the positive electrode surface may be eluted. As described above, since the eluted transition metal ions are electro-deposited on the negative electrode and lower the passivation capability of the SEI, a problem of deteriorating the negative electrode occurs.

In addition, when a lithium secondary battery is used continuously for a long time or left at high temperatures, it is known that a so-called swelling phenomenon occurs in which gas is generated and the thickness of the battery is increased, and the amount of gas generated at this time depends on the state of the SEI.

Therefore, in order to solve this problem, there have been research and development on a method for reducing the swelling of the lithium secondary battery, and increasing the stability at high temperatures by suppressing the elution of metal ions from the positive electrode and forming a stable SEI film on the negative electrode.

### DISCLOSURE OF THE INVENTION

### TECHNICAL PROBLEM

One object of the present disclosure is to provide a non-aqueous electrolyte capable of suppressing the degradation of the positive electrode, reducing side reactions between the positive electrode and the electrolyte, and forming a stable SEI film on the negative electrode.

Further, another object of the present disclosure is to provide a lithium secondary battery with improved overall performance by having improved high-temperature cycle properties and high-temperature storage properties by comprising the above described non-aqueous electrolyte.

### TECHNICAL SOLUTION

The present disclosure provides a non-aqueous electrolyte comprising a lithium salt; an organic solvent; and an additive, wherein the additive incudes a compound represented by Formula 1 below.

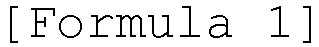

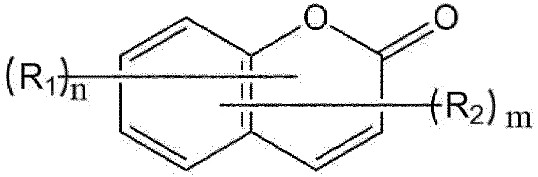

In Formula 1, R₁ may include a halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group or a combination of two or more thereof, and R₂ is a substituent represented by Formula 2 below or a substituent represented by Formula 3 below.

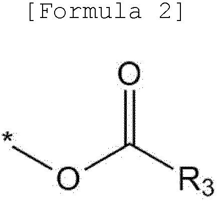

In Formula 2, R₃ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

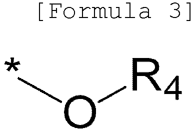

In Formula 3, R₄ is selected from one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

n is an integer of 0 to 5, m is an integer of 1 to 6, and n+m is an integer of 1 to 6.

Further, the present disclosure provides a lithium secondary battery comprising a positive electrode, a negative electrode facing the positive electrode, a separator interposed between the positive electrode and the negative electrode, and the above described non-aqueous electrolyte.

### ADVANTAGEOUS EFFECTS

The non-aqueous electrolyte of the present disclosure has the feature of comprising a compound represented by Formula 1 based on a coumarin structure as an additive. The additive may form a stable solid electrolyte interphase (SEI) film on the surface of the negative electrode while being rapidly reduced and decomposed during initial activation. In particular, a substituent including fluorine contained in the compound represented by Formula 1 and an ester group or an ether group, can increase the inorganic content of the SEI film, thereby improving the durability of the SEI film at high temperatures to an excellent level. Further, according to the non-aqueous electrolyte of the present disclosure, a reactive oxygen compound generated at a positive electrode and the coumarin structure contained in the compound represented by Formula 1 are bonded to each other to have an effect of suppressing the decomposition of the electrolyte and the generation of gas.

Thus, a lithium secondary battery comprising the above-described non-aqueous electrolyte may have enhanced high-temperature cycle characteristics and high-temperature storage characteristics.

### MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the disclosure.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

Before describing the present invention, unless otherwise specified in the present disclosure, the expression "*" denotes the same or different atom or a portion (binding site) connected between ends of a formula.

In addition, in the present specification, it will be understood that in the description of "a to b carbon atoms" herein, "a" and "b" refer to the number of carbon atoms included in a specific functional group. That is, the functional group may include "a" to "b" number of carbon atoms. For example, an "alkyl group having 1 to 5 carbon atoms" refers to an alkyl group with a carbon number of 1 to 5, that is CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, and so on.

In addition, in the present disclosure, the terms "alkyl group", "alkylene group" or "alkynyl group" refer to a substituted or unsubstituted group. Also, unless otherwise defined in the specification, the expression "substitution" denotes that at least one hydrogen bonded to carbon is substituted with an element other than hydrogen; for example, it refers to being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, heterocycloalkenyl group having 3 to 12 carbon atoms, heterocycloalkynyl group having 2 to 12 carbon atoms, aryloxy group having 6 to 12 carbon atoms, a halogen atom, a fluoroalkyl group having 1 to 20 carbon atoms, a nitro group, an aryl group having 6 to 20 carbon atoms, heteroaryl group having 2 to 20 carbon atoms, a haloaryl group having 6 to 20 carbon atoms, etc.

Hereinafter, the present disclosure will be described in more detail.

### Non-Aqueous Electrolyte

The present disclosure relates to a non-aqueous electrolyte. More specifically, the non-aqueous electrolyte may be a non-aqueous electrolyte for a lithium secondary battery.

The non-aqueous electrolyte according to the present disclosure comprises a lithium salt; an organic solvent; and an additive, and the additive includes a compound represented by Formula 1.

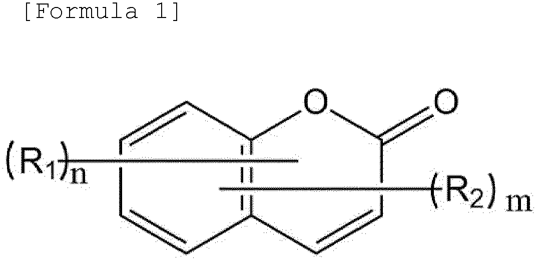

In Formula 1, R₁ may include a halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, sulfone group, sulfonate group, sulfate group or a combination of two or more thereof.

In Formula 1, R₂ is a substituent represented by Formula 2 below or a substituent represented by Formula 3 below. n is an integer of 0 to 5, m is an integer of 1 to 6, and n+m is an integer of 1 to 6.

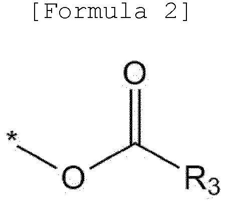

In Formula 2, R₃ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

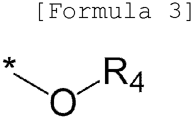

In Formula 3, R₄ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

The non-aqueous electrolyte of the present disclosure has the feature of comprising a compound represented by Formula 1 based on a coumarin structure as an additive. The additive may form a stable solid electrolyte interphase (SEI) film on the surface of the negative electrode while being rapidly reduced and decomposed during initial activation. In particular, a substituent including fluorine contained in the compound represented by Formula 1; and an ester group or an ether group; can increase the inorganic content of the SEI film, thereby improving the durability of the SEI film at high temperatures to an excellent level. Further, according to the non-aqueous electrolyte of the present disclosure, a reactive oxygen compound generated at a positive electrode and the coumarin structure contained in the compound represented by Formula 1 are bonded to each other to have an effect of suppressing the decomposition of the electrolyte and the generation of gas. Thus, a lithium secondary battery comprising the above-described non-aqueous electrolyte according to the present disclosure may have enhanced high-temperature cycle characteristics and high-temperature storage characteristics.

### (1) Lithium Salt

Any lithium salt typically used in a non-aqueous electrolyte for a lithium secondary battery may be used as the lithium salt used in the present disclosure without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻and (CF₃CF₂SO₂)₂N⁻as an anion.

Specifically, the lithium salt may include at least one selected from LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂ and LiBETI (LiN(SO₂CF₂CF₃)₂). Specifically, the lithium salt may include at least one selected from LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂) and LiBETI (LiN(SO₂CF₂CF₃)₂). Specifically, the lithium salt may include LiPF₆ or LiPF₆ and LiFSI.

The lithium salt may be included in a concentration of 0.5 M to 5.0 M, specifically, 0.8 M to 4.0 M in the non-aqueous electrolyte. When the concentration of the lithium salt satisfies the above range, the output characteristics of the battery may be improved by enhancing the lithium ion yield (Li+ transference number) and the dissociation level of the lithium ions.

### (2) Organic Solvent

The organic solvent is a non-aqueous solvent commonly used in lithium secondary batteries, and is not limited as long as decomposition due to an oxidation reaction or the like during the charging and discharging of the battery can be minimized.

Specifically, the organic solvent may include at least one organic solvent selected from a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is an organic solvent having high viscosity and a high dielectric constant, and thus, is an organic solvent capable of dissociating a lithium salt well in an electrolyte, and specific examples thereof may include at least one organic solvent selected from ethylene carbonate (EC), propylene carbonate (PC), 1,2-butylene carbonate, 2,3-butylene carbonate, 1,2-pentylene carbonate, 2,3-pentylene carbonate, fluoroethylene carbonate, trifluoropropylene carbonate and vinylene carbonate, more specificallymay include at least one selected from ethylene carbonate and fluoroethylene carbonate, and more specifically may include fluoroethylene carbonate.

In addition, the linear carbonate-based organic solvent is an organic solvent having low viscosity and a low dielectric constant, specifically may include at least one organic solvent selected from dimethyl carbonate (DMC), diethyl carbonate (DEC), dipropyl carbonate, ethylmethyl carbonate (EMC), methylpropyl carbonate, and ethylpropyl carbonate, and more specifically, may include diethyl carbonate (DEC).

The organic solvent may be a mixture of a cyclic carbonate-based organic solvent and a linear carbonate-based organic solvent, wherein the cyclic carbonate-based organic solvent and the linear carbonate-based organic solvent may be mixed in a volume ratio of 1:99 to 40:60, specifically 5:95 to 30:70, and more specifically 5:95 to 20:80. When the mixing ratio of the cyclic carbonate-based organic solvent and the linear carbonate-based organic solvent satisfies the above range, high dielectric constant and low viscosity characteristics may be simultaneously satisfied, and excellent ionic conductivity characteristics may be achieved.

In addition, the organic solvent may further include at least one ester-based organic solvent selected from the linear ester-based organic solvent and the cyclic ester-based organic solvent in addition to at least one carbonate-based organic solvent selected from the cyclic carbonate-based organic solvent and the linear carbonate-based organic solvent in order to prepare an electrolyte having a high ionic conductivity.

The linear ester-based organic solvent may include any one selected from methyl acetate, ethyl acetate, propyl acetate, methyl propionate, ethyl propionate, propyl propionate, and butyl propionate and a mixture of two or more thereof.

In addition, the cyclic ester-based organic solvent may include at least one selected from γ-butyrolactone, γ-valerolactone, γ-caprolactone, σ-valerolactone, and ε-caprolactone.

The organic solvent may be used by adding organic solvents commonly used in non-aqueous electrolytes without limitation, if necessary. For example, it may further include at least one organic solvent selected from an ether-based organic solvent, a glyme-based solvent, and a nitrile-based organic solvent.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl)-1,3-dioxolane (TFDOL),and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, digylme, triglyme, and tetra-glyme (TEGDME) as a solvent with low reactivity with metals, but is not limited thereto.

The nitrile-based solvent includes one or more selected from acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile,and 4-fluorophenylacetonitrile, but is not limited thereto.

### (3)Additive

The non-aqueous electrolyte according to the present disclosure includes a compound represented by Formula 1.

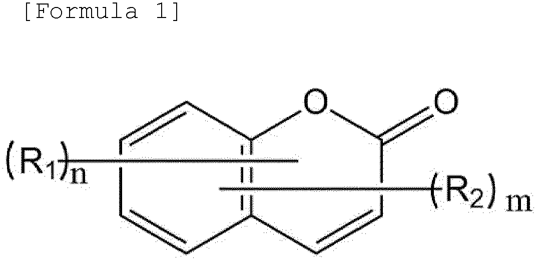

In Formula 1, R₁ may include a halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group or a combination of two or more thereof.

In Formula 1, R₂ is a substituent represented by Formula 2 below or a substituent represented by Formula 3 below, and n is an integer of 0 to 5, m is an integer of 1 to 6, and n+m is an integer of 1 to 6. When n and m are each 2 or more, two or more R₁ may be the same or different from each other, and two or more R₂ may be the same or different from each other.

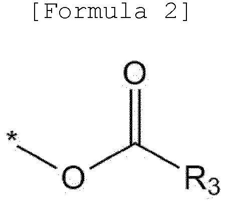

In Formula 2, R₃ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

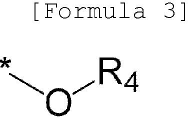

In Formula 3, R₄ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site.

The compound represented by Formula 1 is a coumarin-based compound including a substituent containing a fluorine and an ester group (Formula 2) and/or a substituent containing a fluorine and an ether group (Formula 3). Since the coumarin structure included in Formula 1 has a higher reaction energy with reactive oxygen than an organic solvent such as ethylene carbonate or the like, when reactive oxygen is generated, it binds to the reactive oxygen before the organic solvent does. Therefore, when the Formula 1 compound is included in the non-aqueous electrolyte, a reactive oxygen compound generated at the positive electrode and the coumarin structure contained in the compound represented by Formula 1 are bonded to each other to have an effect of suppressing the decomposition of the electrolyte and the generation of gas.

The compound represented by Formula 1 may form a stable solid electrolyte interphase (SEI) film on the surface of the negative electrode while being rapidly reduced and decomposed during initial activation. The coumarin structure contained in the compound represented by Formula 1 has strong reducibility at the negative electrode, and upon the initial activation of the lithium secondary battery, the ring structure is opened, enabling the formation of a polyethylene oxide-based polymer-type SEI layer. This polymer-type SEI layer has the advantages of excellent flexibility and recovery. Substituents containing fluorine and an ester group (Formula 2) and/or substituents containing fluorine and an ether group (Formula 3) included in the compound represented by Formula 1 can increase the inorganic content of the SEI film, thereby improving the durability of the SEI film at high temperatures to an excellent level. In particular, the ester group or ether group that connects the fluorine-containing substituent and the coumarin structure contains oxygen and helps enhance a lithium ion conductivity when forming an SEI film, which is desirable in terms of promoting the formation reaction of the SEI film by reducing the electron density of the substituent.

Therefore, the non-aqueous electrolyte including the compound of Formula 1, which simultaneously contains the coumarin structure and a fluorine and ester group containing substituent, as an additive may quickly form an organic/inorganic composite SEI film on the negative electrode, thereby improving the high-temperature cycle properties and high-temperature storage properties of a lithium secondary comprising the same to an excellent level.

Specifically, the compound represented by Formula 1 may include at least one selected from a compound represented by Formula 1-A and a compound represented by Formula 1-B, and more specifically, may include a compound represented by Formula 1-A.

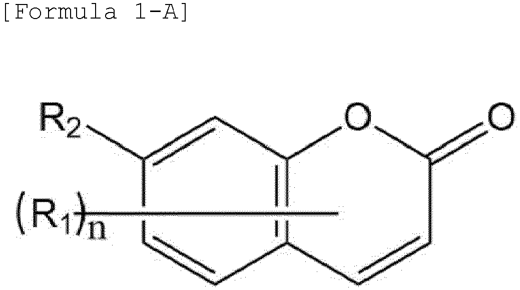

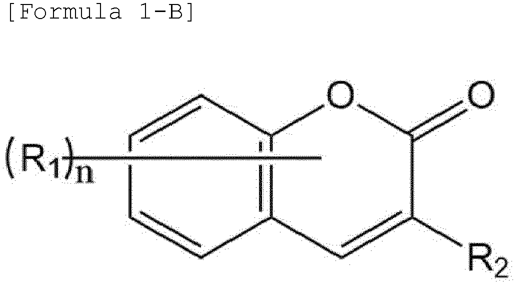

In Formula 1-A and Formula 1-B, the definitions of R₁, R₂, and n are as described above (as defined in Formula 1).

When R₂ is substituted with coumarin as in Formula 1-A and Formula 1-B, it is preferable in terms of promoting the formation reaction of the SEI film of the coumarin structure itself. When R₂ is substituted with coumarin as in Formula 1-A, steric hindrance is reduced at the carbon at position 4 of the ring structure of Formula 1 (according to IUPAC standards) where an electrochemical reaction can occur, thereby further promoting the formation reaction of the SEI film.

More specifically, the compound represented by Formula 1 may include at least one selected from a compound represented by Formula 1-a and a compound represented by Formula 1-b below, and more specifically, may include a compound represented by Formula 1-a.

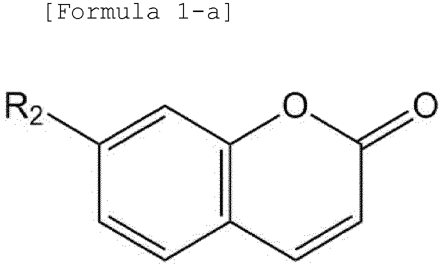

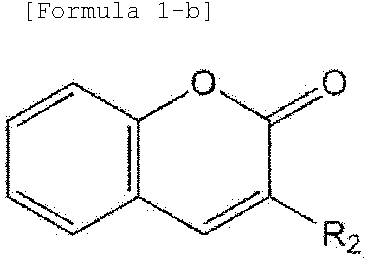

In Formula 1-a and Formula 1-b, the definition of R₂ is as described above (as defined in Formula 1).

In Formula 2, R₃ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and more specifically, may be an one or more fluorine substituted alkyl group having 1 to 10 carbon atoms, more specifically may be an one or more fluorine substituted alkyl group having 1 to 8 carbon atoms, more specifically may be an one or more fluorine substituted alkyl group having 2 to 7 carbon atoms, and more specifically may be an one or more fluorine substituted alkyl group having 3 to 5 carbon atoms.

More specifically, R₃ may be selected from a pentafluoroethyl group, a nonafluorobutyl group, and a heptadecafluoroheptyl group, and even more specifically may be a nonafluorobutyl group. In this case, it is desirable in that it can form a polymer film with improved durability by containing inorganic substances in an appropriate amount while having a molecular weight that does not inhibit the mobility of lithium ions, etc.

In Formula 3, R₄ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and more specifically, may be an one or more fluorine substituted alkyl group having 1 to 10 carbon atoms, more specifically may be an one or more fluorine substituted alkyl group having 1 to 8 carbon atoms, more specifically may be an one or more fluorine substituted alkyl group having 2 to 7 carbon atoms, and more specifically may be an one or more fluorine substituted alkyl group having 3 to 5 carbon atoms.

More specifically, R₄ may be selected from a pentafluoroethyl group, a nonafluorobutyl group, and a heptadecafluoroheptyl group, and even more specifically may be a nonafluorobutyl group. In this case, it is desirable in that it can form a polymer film with improved durability by containing inorganic substances in an appropriate amount while having a molecular weight that does not inhibit the mobility of lithium ions, etc.

In Formula 1, R₂ is a substituent represented by Formula 2 or a substituent represented by Formula 3, and specifically may be a substituent represented by Formula 2.

Further, the compound represented by Formula 1 may specifically include at least one selected from compounds represented by Formula 1-a-1, Formula 1-a-2, Formula 1-a-3, Formula 1-b-1, Formula 1-b-2, Formula 1-b-3, Formula 1-c-1, Formula 1-c-2, Formula 1-c-3, Formula 1-d-1, Formula 1-d-2, and Formula 1-d-3.

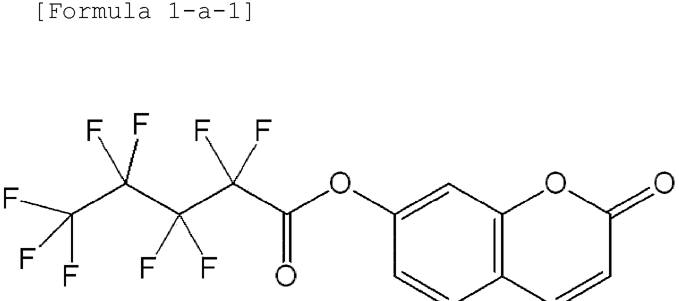

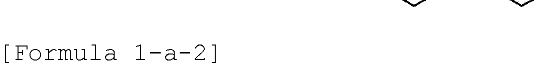

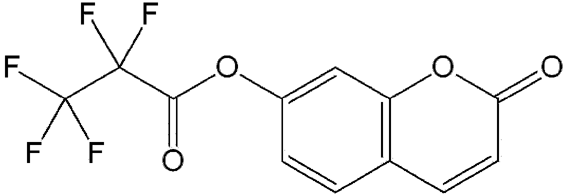

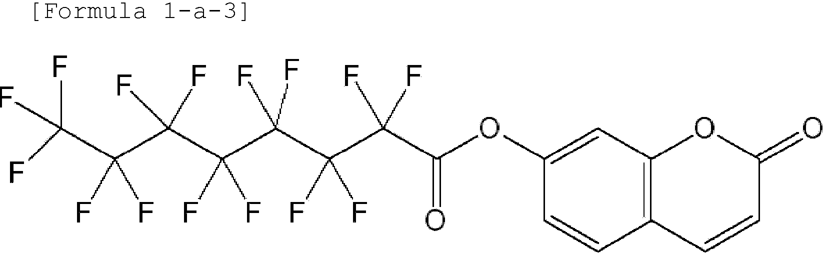

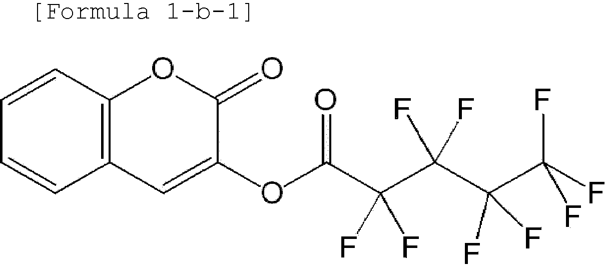

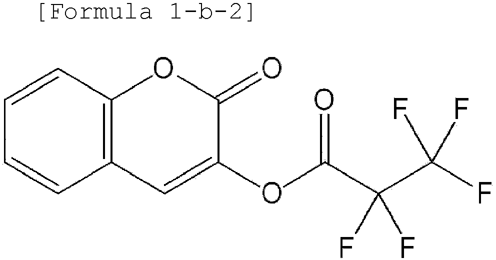

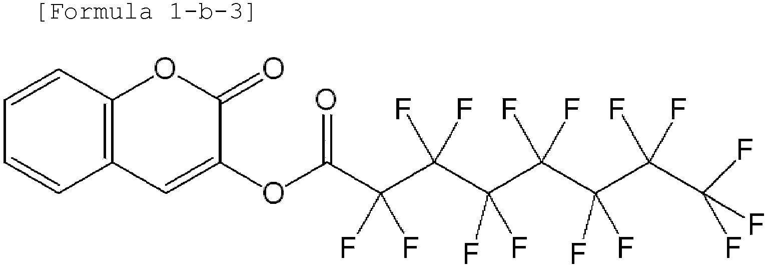

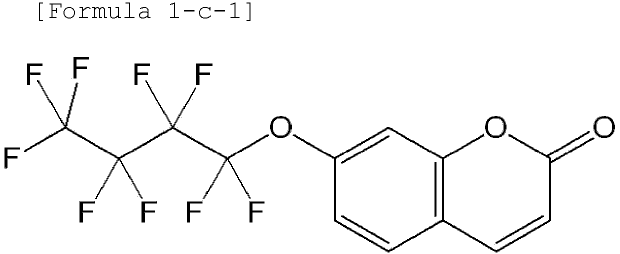

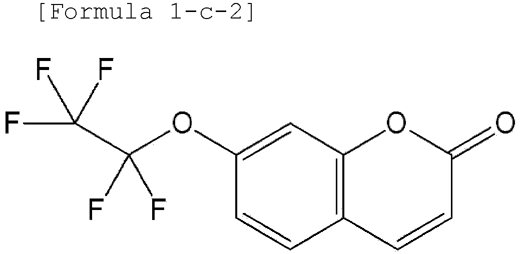

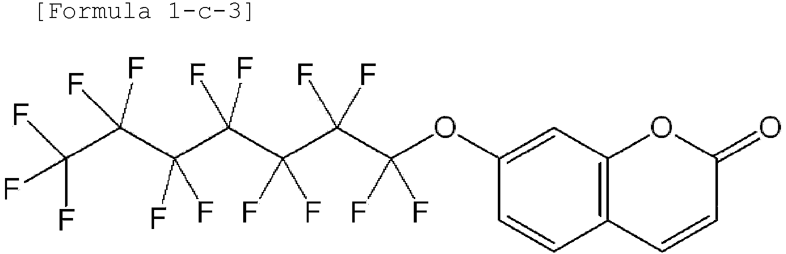

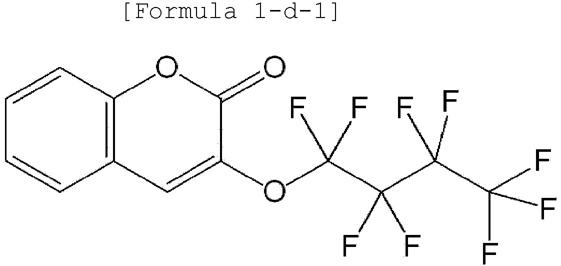

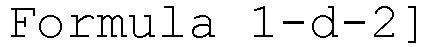

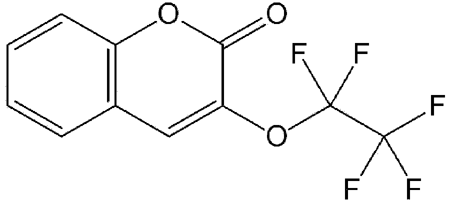

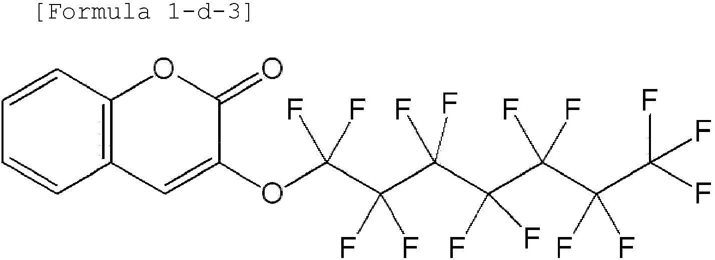

The compound represented by Formula 1 may be included in an amount of 0.01 wt% to 5 wt%, specifically 0.05 wt% to 4.5 wt%, more specifically 0.1 wt% to 4 wt%, and even more specifically 0.3 wt% to 2.5 wt% in the non-aqueous electrolyte. When the amount of the compound represented by Formula 1 satisfies the above range, it is desirable in that it sufficiently exhibits the above described effects of protecting the electrode interface and of preventing the decomposition of the organic solvent and side reactions, while preventing an increase in the resistance of a lithium secondary battery due to its excessive addition and a degradation in life performance resulting therefrom.

The additive may further include an additional additive along with the compound represented by Formula 1. The additional additive may be included in the non-aqueous electrolyte to prevent the occurrence of the collapse of the negative electrode due to the decomposition of the non-aqueous electrolyte in a high power environment or to further improve low-temperature high rate discharge characteristics, high-temperature stability, overcharge prevention, and an effect of suppressing battery swelling at high temperatures.

Specific examples of the additional additive may be at least one selected from vinylene carbonate, vinyl ethylene carbonate, fluoroethylene carbonate, propane sultone, propene sultone, succinonitrile, adiponitrile, ethylene sulfate, LiPO₂F₂, lithium difluorooxalatoborate (LiODFB), Lithium bis-(oxalato)borate (LiBOB), 3-trimethoxysilanyl-propyl-N-aniline (TMSPa), andTris(trimethylsilyl) Phosphite (TMSPi).

The additional additive may be included in an amount of 0.1 wt% to 15 wt% in the non-aqueous electrolyte.

### Lithium Secondary Battery

Also, the present disclosure provides a lithium secondary battery comprising the above-described non-aqueous electrolyte.

Specifically, the lithium secondary battery may include a positive electrode, a negative electrode facing the positive electrode, a separator interposed between the positive electrode and the negative electrode, and the above described non-aqueous electrolyte.

The lithium secondary battery of the present disclosure may be prepared by typical methods known in the art. For example, After an electrode assembly, in which the positive electrode, the negative electrode and the separator, and are sequentially stacked, is formed and accommodated in a battery case, the lithium secondary battery of the present disclosure may be prepared by injecting the non-aqueous electrolyte thereto.

### (1) Positive Electrode

The positive electrode may include a positive electrode current collector and a positive electrode active material layer disposed on at least one surface of the positive electrode current collector.

The positive electrode current collector is not particularly limited so long as it has conductivity without causing adverse chemical changes in the battery, specifically, may include at least one selected from copper, stainless steel, aluminum, nickel, titanium, fired carbon, and aluminum-cadmium alloy, and preferably may include aluminum.

The positive electrode current collector generally has a thickness of 3 to 500 µm.

The positive electrode current collector forms microscopic irregularities on the surface to improve the binding force of a positive electrode active material. For example, the positive electrode current collector may be used in various shapes such as a film, a sheet, a foil, a net, a porous body, a foam body, and a non-woven fabric body.

The positive electrode active material layer is disposed on at least one surface of the positive electrode current collector. Specifically, the positive electrode active material layer may be disposed on one or both surfaces of the positive electrode current collector.

The positive electrode active material layer may include a positive electrode active material.

The positive electrode active material is a compound capable of reversibly intercalating and deintercalating lithium, wherein the positive electrode active material may include a lithium transition metal composite oxide including lithium and at least one transition metal selected from nickel, cobalt, manganese, and aluminum, and may preferably include a lithium transition metal composite oxide including lithium and transition metals including nickel, cobalt, and manganese.

Examples of the lithium transition metal composite oxide include a lithium-manganese-based oxide (for example, LiMnO₂, LiMn₂O₄and the like), a lithium-cobalt-based oxide (for example, LiCoO₂and the like), a lithium-nickel-based oxide (for example, LiNiO₂, and the like), a lithium-nickel-manganese-based oxide (for example, LiNi_{1-y}Mn_{Y}O₂(wherein 0<Y<1), LiMn_{2-z}Ni_{z}O₄(wherein 0<z<2), and the like), a lithium-nickel-cobalt-based oxide (for example, LiNi_{1-Y1}Co_{Y1}O₂ (wherein 0<Y1<1),and the like), a lithium-manganese-cobalt-based oxide (for example, LiCo_{1-Y2}Mn_{Y2}O₂ (wherein 0<Y2<1), LiMn_{2-z1}Co_{z1}O₄(wherein 0< z1<2),and the like), a lithium-nickel-manganese-cobalt-based oxide (for example, Li (NiₚCo_{q}Mnᵣ₁)O₂(wherein 0<p<1, 0<q<1, 0< r1<1, p+q+r1=1) or Li (Niₚ₁Co_{q1}Mnᵣ₂)O₄(wherein 0<p1<2, 0<q1<2, 0<r2<2, p1+q1+r2=2), and the like), or a lithium-nickel-cobalt-transition metal (M) oxide (for example, Li (Niₚ₂Co_{q2}Mnᵣ₃M_{S2})O₂(wherein M is selected from Al, Fe, V, Cr, Ti, Ta, Mg and Mo, p2, q2, r3 and S2 are each an atomic fraction of independent elements, and 0<p2<1, 0<q2<1, 0<r3< 1, 0<S2<1, p2+q2+r3+S2=1), and the like) and the like, and among them, any one or two or more compounds may be included. Among them, in view of enhancing the capacity characteristics and stability of a battery, the lithium transition metal composite oxide may be LiCoO₂, LiMnO₂, LiNiO₂, a lithium nickel-manganese-cobalt oxide (for example, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ or Li(Ni_{0.8}Mn_{0.1}Co_{0.1})O₂, and the like), a lithium nickel cobalt aluminum oxide (for example, Li (Ni_{0.8}Co_{0.15}Al_{0.05})O₂ and the like), and the like, and in consideration of the remarkable improvement effects caused by controlling the type and content ratio of the constituent elements forming the lithium transition metal composite oxide, the lithium transition metal composite oxide may be Li(Ni_{0.6}Mn_{0.2}Co_{0.2})O₂, Li(Ni_{0.5}Mn_{0.3}Co₀.₂)O₂, Li(Ni_{0.7}Mn_{0.15}Co_{0.15})O₂ or Li(Ni_{0.8}Mn_{0.1}Co_{0.1})O₂ and the like, and among them, any one or a mixture of two or more thereof may be used.

More specifically, the positive electrode active material is a lithium transition metal composite oxide, and may contain 60 mol % or more of nickel, based on the total number of moles of transition metals included in the lithium transition metal composite oxide. Specifically, the positive electrode active material is a lithium transition metal composite oxide and the transition metal includes nickel, and at least one selected from manganese, cobalt, and aluminum, and may include nickel in an amount of 60 mol % or more, specifically 60 mol % to 90 mol %, based on the total number of moles of the transition metal. When the lithium transition metal composite oxide using such a high nickel content is used together with the above-described non-aqueous electrolyte, it is preferable for the purpose of reducing by-products in the gas phase generated by structural collapse.

In addition, the positive electrode active material may include a lithium composite transition metal oxide represented by Formula 5.

[Formula 5] Li₁₊ₓ(NiₐCo_{b}Mn_{c}M_{d})O₂

In Formula 5, M is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and 1+x, a, b, c and d are each independent atomic fractions of elements, 0≤x≤0.2, 0.50≤a<1, 0<b≤0.25, 0<c≤0.25, 0≤d≤0.1, a+b+c+d=1.

Preferably, a, b, c and d may be 0.70≤a≤0.95, 0.025≤b≤0.20, 0.025≤c≤0.20, and 0≤d≤0.05, respectively.

In addition, a, b, c and d may be 0.80≤a≤0.95, 0.025≤b≤0.15, 0.025≤c≤0.15, and 0≤d≤0.05, respectively.

In addition, a, b, c and d may be 0.85≤a≤0.90, 0.05≤b≤0.10, 0.05≤c≤0.10,and 0≤d≤0.03, respectively.

The positive electrode active material may be included in an amount of 80 wt % to 99 wt %, preferably 92 wt % to 98.5 wt % in the positive electrode active material layer in consideration of the sufficient capacity of the positive electrode active material.

The positive electrode active material layer may further include a binder and/or a conductive material together with the above-described positive electrode active material.

The binder is a component which assists in the cohesion of an active material, a conductive material, and the like and the cohesion to a current collector, and specifically, may include at least one selected from polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and preferably may include polyvinylidene fluoride.

The binder may be included in an amount of 1 wt % to 20 wt %, preferably 1.2 wt % to 10 wt % in the positive electrode active material layer, in terms of sufficiently securing a cohesive force between components such as the positive electrode active material.

The conductive material can be used to assist and improve the conductivity of the secondary battery, and is not particularly limited as long as the conductive material has conductivity without causing chemical changes. Specifically, the positive electrode conductive material may include at least one selected from graphite such as natural graphite or artificial graphite; carbon black such as carbon black, acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon black in terms of improving conductivity.

The conductive material may be included in an amount of 1 wt % to 20 wt %, preferably 1.2 wt % to 10 wt % in the positive electrode active material layer, in terms of sufficiently securing electric conductivity.

The positive electrode active material layer may have a thickness of 30 µm to 400 µm, preferably 40 µm to 110 µm.

The positive electrode may be manufactured by coating the positive electrode current collector with a positive electrode slurry including a positive electrode active material and selectively a binder, a conductive material and a solvent for forming a positive electrode slurry, and then drying and rolling.

The solvent for forming a positive electrode slurry may include an organic solvent such as N-methyl-2-pyrrolidone (NMP) . The solid content of the positive electrode slurry may be 40 wt% to 90 wt %, specifically 50 wt % to 80 wt %.

### (2) Negative Electrode

The negative electrode faces the positive electrode.

The negative electrode may include a negative electrode current collector and a negative electrode active material layer disposed on at least one surface of the negative electrode current collector.

The negative electrode current collector is not particularly limited so long as it has conductivity without causing chemical changes in the battery, and specifically may include at least one selected from copper, stainless steel, aluminum, nickel, titanium, fired carbon, copper or stainless steel that is surface-treated with one of carbon, nickel, titanium, silver, and the like, and an aluminum-cadmium alloy may be used as the negative electrode current collector.

The negative electrode current collector generally may have a thickness of 3 to 500 µm.

The negative electrode current collector forms microscopic irregularities on the surface to improve the binding force of a negative electrode active material. Specifically, the negative electrode current collector may be used in various shapes such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one or both surfaces of the negative electrode current collector.

The negative electrode active material layer may include a negative electrode active material.

The negative electrode active material is a compound capable of reversibly intercalating and deintercalating lithium, and may include at least one selected from a carbon-based active material, a (semi-)metal-based active material, and a lithium metal. Specifically, the negative electrode active material may include at least one selected from a carbon-based active material and a (semi-)metal-based active material.

The carbon-based active material may include at least one selected from artificial graphite, natural graphite, hard carbon, soft carbon, carbon black, graphene, and fibrous carbon, preferably at least one selected from artificial graphite and natural graphite.

The average particle diameter (D₅₀) of the carbon-based active material may be in the range of 10 µm to 30 µm and preferably 15 µm to 25 µm in terms of ensuring the structural stability during charging and discharging and reducing side reactions with an electrolyte solution.

Specifically, the (semi) metal-based active material may include at least one (semi) metal selected from Cu, Ni, Na, K, Rb, Cs, Fr, Be, Mg, Ca, Sr, Si, Sb, Pb, In, Zn, Ba, Ra, Ge, Al, V, Ti, and Sn; an alloy of at least one (semi) metal selected from Cu, Ni, Na, K, Rb, Cs, Fr, Be, Mg, Ca, Sr, Si, Sb, Pb, In, Zn, Ba, Ra, Ge, Al, V, Ti, and Sn,and lithium; an oxide of at least one (semi) metal selected from Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); a lithium vanadium oxide; etc..

More specifically, the (semi) metal-based active material may include a silicon-based active material.

The silicon-based active material may include a compound represented by SiOₓ(0≤x<2). In the case of SiO₂, since lithium cannot be stored because it does not react with lithium ions, and x is preferably within the above range.

The average particle size (D₅₀) of the silicon-based active material may be 1 *µ*m to 30 *µ*m, preferably 2 *µ*m to 15 *µ*m in terms of ensuring the structural stability during charging and discharging and reducing side reactions with an electrolyte solution.

The negative electrode active material may be included in an amount of 60 wt % to 99 wt %in the negative electrode active material layer.

The negative electrode active material layer may further include a binder and/or a conductive material together with the negative electrode active material.

The binder is used to improve battery performance by improving adhesion between the negative electrode active material layer and the negative electrode current collector, for example, may include at least one selected from a polyvinylidene fluoride-hexafluoropropylene copolymer(PVDF-co-HFP), polyvinylidenefluoride(PVDF), polyacrylonitrile, polymethylmethacrylate, polyvinyl alcohol, carboxymethyl cellulose(CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluororubber, and a material in which hydrogen is substituted with Li, Na or Ca, and may also include various copolymers thereof.

The binder may be included in the negative electrode active material layer in an amount of 0.5 wt % to 30 wt %.

The conductive material is not particularly limited as long as it has conductivity without causing chemical changes in the battery, for example, graphite such as natural graphite or artificial graphite; carbon black, such as acetylene black, Ketjen black, channel black, furnace black, lamp black, and summer black; conductive fibers such as carbon fibers and metal fibers; conductive tubes such as carbon nanotubes; fluorocarbons; metal powders such as aluminum and nickel powder; conductive whiskers such as zinc oxide and potassium titanate; conductive metal oxides such as titanium oxide; and conductive materials such as polyphenylene derivatives may be used.

The conductive material may be included in the negative electrode active material layer in an amount of 0.5 wt % to 30 wt %.

The thickness of the negative electrode active material layer may be 10 µm to 200 µm.

The negative electrode may be manufactured by coating a negative electrode slurry including a negative electrode active material, a binder, a conductive material and/or a solvent for forming the negative electrode slurry on at least one surface of the negative electrode current collector, followed by drying and rolling.

The solvent for forming a negative electrode slurry may include, for example, at least one selected from distilled water, N-methyl-2-pyrrolidone (NMP), ethanol, methanol, and isopropyl alcohol, preferably distilled water, for the purpose of facilitating the dispersion of the negative electrode active material, the binder and/or the conductive material. The solid content of the negative electrode slurry may be 20 wt % to 80 wt %.

### (3) Separator

In addition, as the separator, a common porous polymer film typically used as a separator, for example, a porous polymer film prepared with a polyolefin-based polymer, such as an ethylene homocopolymer, a propylene homocopolymer, an ethylene/butene copolymer, an ethylene/hexene copolymer, and an ethylene/methacrylate copolymer may be used alone, or in a laminated form thereof. Alternatively, a typical porous non-woven fabric, for example, a non-woven fabric formed of a glass fiber having a high melting point or polyethylene terephthalate fiber may be used, but the present disclosure is not limited thereto. Also, a coated separator including a ceramic component or a polymer material may be used to secure heat resistance or mechanical strength, and may be selectively used in a single-layered or a multi-layered structure.

A shape of the lithium secondary battery of the present disclosure is not particularly limited, but a cylindrical type using a can, a prismatic type, a pouch type, or a coin type may be used.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

### Examples and Comparative Examples

### Example 1

### (Preparation of Non-Aqueous Electrolyte)

A mixture of fluoroethylene carbonate (FEC) and diethyl carbonate (DEC) was used in a volume ratio of 10:90 as an organic solvent.

LiPF₆ and LiFSI as a lithium salt; a compound represented by Formula 1-a-1; as an additional additive vinylene carbonate (VC), propane sultone (PS), ethylene sulfate(ESa), lithium difluorophosphate (LiDFP) and LiBF₄ were mixed to prepare a non-aqueous electrolyte.

The LiPF₆ and LiFSI were included in the non-aqueous electrolyte at concentrations of 0.5 M and 1.0 M, respectively.

The compound represented by Formula 1-a-1 was included in an amount of 0.5 wt% in the non-aqueous electrolyte.

Vinylene carbonate (VC), propane sultone (PS), ethylene sulfate(ESa), lithium difluorophosphate (LiDFP) and LiBF₄ were included in an amount of 0.5 wt% in the non-aqueous electrolyte, respectively.

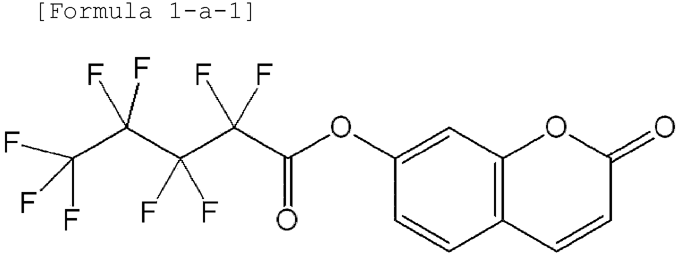

### (Preparation of Lithium Secondary Battery)

A positive electrode active material (LiNi_{0.85}Co_{0.05}Mn_{0.07}Al_{0.03}O₂): a conductive material (carbon nanotube): a binder (polyvinylidenefluoride) were added in a weight ratio of 98.0 : 0.7 : 1.3 to N-methyl-2-pyrrolidone (NMP), which was a solvent, to prepare a positive electrode slurry (solid content 76.5 wt%). The positive electrode mixture slurry was applied on one surface of a positive electrode current collector (Al thin film) having a thickness of 12 µm, dried and then roll-pressed to prepare a positive electrode.

A negative electrode active material (Si): a conductive material (carbon black): a binder (styrene-butadiene rubber) were added in a weight ratio of70.0:20.3:9.7to N-methyl-2-pyrrolidone (NMP), which was a solvent, to prepare a negative electrode slurry (solid content 26wt %). The negative electrode mixture slurry was applied on one surface of a negative electrode current collector (Cu thin film) having a thickness of 15µm, dried and then roll-pressed to prepare a negative electrode.

In a dry room, a polyethylene porous polymer separator was interposed between the positive electrode and the negative electrode prepared above, and then the prepared non-aqueous electrolyte was injected thereto to prepare a secondary battery.

### Example 2

A non-aqueous electrolyte and a lithium secondary battery were prepared in the same manner as in Example 1 except that the compound represented by Formula 1-b-1 was used instead of the compound represented by Formula 1-a-1.

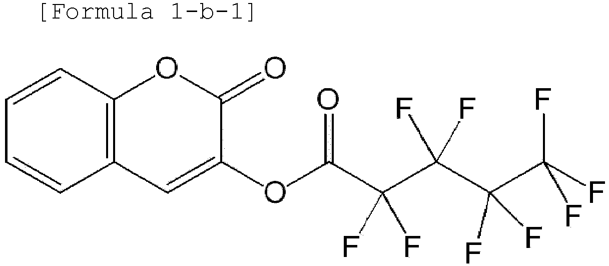

### Example 3

A non-aqueous electrolyte and a lithium secondary battery were prepared in the same manner as in Example 1, except that a non-aqueous electrolyte was prepared by adding the compound represented by Formula 1-a-1 to the non-aqueous electrolyte in an amount of 0.1 wt% instead of 0.5 wt%.

### Example 4

A non-aqueous electrolyte and a lithium secondary battery were prepared in the same manner as in Example 1, except that a non-aqueous electrolyte was prepared by adding the compound represented by Formula 1-a-1 to the non-aqueous electrolyte in an amount of 4 wt% instead of 0.5 wt%.

### Example 5

A non-aqueous electrolyte and a lithium secondary battery were prepared in the same manner as in Example 1, except that a non-aqueous electrolyte was prepared by adding the compound represented by Formula 1-a-2 instead of the compound represented by Formula 1-a-1 in an amount of 0.5 wt% to the non-aqueous electrolyte.

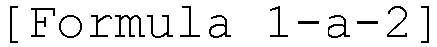

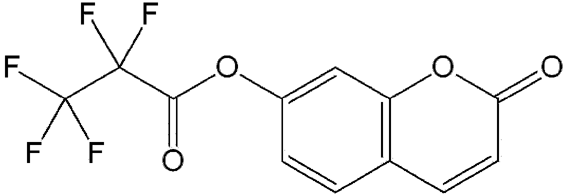

### Example 6

A non-aqueous electrolyte and a lithium secondary battery were prepared in the same manner as in Example 1, except that a non-aqueous electrolyte was prepared by adding the compound represented by Formula 1-a-3 instead of the compound represented by Formula 1-a-1 in an amount of 0.5 wt% to the non-aqueous electrolyte.

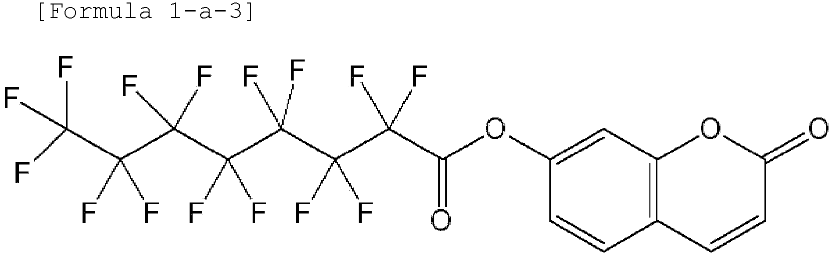

### Example 7

A non-aqueous electrolyte and a lithium secondary battery were prepared in the same manner as in Example 1, except that a non-aqueous electrolyte was prepared by adding the compound represented by Formula 1-c-1 instead of the compound represented by Formula 1-a-1 in an amount of 0.5 wt% to the non-aqueous electrolyte.

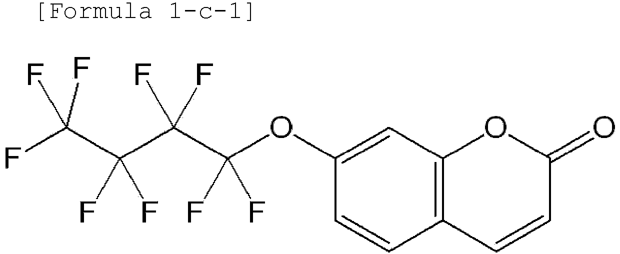

### Comparative Example 1

A non-aqueous electrolyte and a lithium secondary battery were prepared in the same manner as in Example 1, except that the compound represented by Formula 1-a-1 was not added.

### Comparative Example 2

A non-aqueous electrolyte and a lithium secondary battery were prepared in the same manner as in Example 1, except that the compound represented by Formula 4 was added instead of the compound represented by Formula 1-a-1.

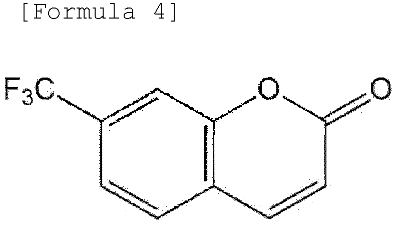

### Experimental Examples

### Experimental Example 1: Evaluation of high-temperature cycle capacity retention rate

The lithium secondary batteries prepared in Examples 1 to 7 and Comparative Examples 1 and 2 were charged to 4.2V at 45°C using an electrochemical charger/discharger under a CC/CV, 0.33C conditions, and were then discharged to 2.5V under CC, 0.33C conditions, which was set as one cycle. After 300 cycles of charging/discharging were performed and the capacity retention rate was measured.

The capacity retention rate was calculated by using the following equation, and the results are shown in Table 1 below. Capacity retention rate(%) = (discharge capacity after 300 cycles/discharge capacity after one cycle) × 100

### Experimental Example 2: Evaluation of high-temperature cycle resistance increase rate

The lithium secondary batteries prepared in Examples 1 to 7 and Comparative Examples 1 and 2 were charged to 4.2V at 45°C under a CC/CV, 0.33C conditions, and were then discharged to 2.5V under CC, 0.33C conditions. This was set as one cycle, and 300 cycles of charging/discharging were performed.

After one cycle of charging and discharging, the discharge capacity after one cycle was measured using an electrochemical charger/discharger, the SOC was adjusted to SOC 50%, and a pulse of 2.5C was then applied for 10 seconds. The initial resistance was calculated through a difference between the voltage before the pulse application and the voltage after the pulse application.

After 300 cycles of charging and discharging, the resistance after 300 cycles was calculated in the same manner as above. The resistance increase rate was calculated using the following equation, and the results are shown in Table 1 below. Resistance increase rate (%) = (resistance after 300 cycles-initial resistance)/initial resistance× 100

### Experimental Example 3: Evaluation of volume increase rate after high-temperature cycle charging/discharging

300 cycles of charging and discharging were performed on the lithium secondary batteries prepared in Examples 1 to 7 and Comparative Examples 1 and 2 in the same manner as in Experimental Example 1. At this time, the volume (initial volume) of the lithium secondary battery before the charging and discharging and the volume of the lithium secondary battery after 300 cycles were measured. The volume increase rate was calculated using the following equation, and the results are shown in Table 3 below. Volume increase rate (%) = (volume of lithium secondary battery after 300 cycles-initial volume)/initial volume) × 100

**[Table 1]**

| | Experimental Example 1 | Experimental Example 2 | Experimental Example 3 |
|---|---|---|---|
| | Capacity retention rate (%) | Resistance increase rate (%) | Volume increase rate (%) |
| Example 1 | 98.3 | 7.9 | 10.3 |
| Example 2 | 97.5 | 8.3 | 11.5 |
| Example 3 | 96.3 | 9.7 | 13.8 |
| Example 4 | 93.3 | 10.1 | 14.3 |
| Example 5 | 91.3 | 15.3 | 17.2 |
| Example 6 | 90.8 | 15.4 | 17.3 |
| Example 7 | 88.9 | 16.3 | 18.7 |
| Comparative Example 1 | 68.5 | 30.3 | 40.1 |
| Comparative Example 2 | 71.3 | 20.5 | 25.3 |

Referring to Table 1, it can be confirmed that the lithium secondary batteries of Examples 1 to 7 using the non-aqueous electrolyte including the compound represented by Formula 1 have excellent high-temperature cycle lifespan performance, low resistance increase rates, and small volume increase according to the cycles when compared to the lithium secondary batteries of Comparative Examples 1 and 2.

### Experimental Example 4: Evaluation of Capacity Retention Rate after High Temperature Storage

The lithium secondary batteries prepared in Examples 1 to 7 and Comparative Examples 1 and 2 were initially charged and discharged by charging them to 4.25V/55 mA at room temperature under 0.33C/4.25V constant current/constant voltage (CC/CV) conditions and discharging at 0.33C to 2.5V, charged to 4.25V/55 mA under 0.33 C/4.25V constant current/constant voltage (CC/CV) conditions at room temperature, and then stored at 60°C for 12 weeks. After the storage, the secondary batteries were charged up to 4.25V/55 mA under 0.33 C/4.25V constant current/constant voltage (CC/CV) conditions at room temperature, and then discharged to 2.5V at 0.33C. The capacity at the time of discharging was measured.

The capacity retention rate was calculated using the following equation, and the results are shown in Table 2 below. Capacity retention rate(%) = (discharge capacity after 12 weeks of storage /initial discharge capacity) × 100

### Experimental Example 5: Evaluation of resistance increase rate after high temperature storage

The lithium secondary batteries prepared in Examples 1 to 7 and Comparative Examples 1 and 2 were initially charged and discharged in the same manner as in Experimental Example 4. After the capacity was confirmed at room temperature, the lithium secondary batteries were charged to SOC 50 based on the discharge capacity and were discharged at a current of 3C for 10 seconds. The resistance was measured by a voltage drop difference to obtain an initial resistance, and was measured by the same method after storage at 60°C for 12 weeks to obtain a final resistance. The resistance increase rate was calculated using the following equation, and the results are shown in Table 2 below. Resistance increase rate (%) = (final resistance-initial resistance)/(initial resistance) × 100

### Experimental Example 6: Evaluation of volume increase rate after high temperature storage

The lithium secondary batteries prepared in Examples 1 to 7 and Comparative Examples 1 and 2 were initially charged and discharged in the same manner as in Experimental Example 4. The volume of each battery was measured by setting SOC 50 based on the discharge capacity, which was defined as an initial volume, and the volume measured after high-temperature storage at 60°C for 12 weeks at a SOC of 100% was defined as a final volume. The volume increase rate of the battery was calculated using the following equation, and the results are shown in Table 2 below. Volume increase rate (%) = (final volume-initial volume)/initial volume) × 100

**[Table 2]**

| | Experimental Example 4 | Experimental Example 5 | Experimental Example 6 |
|---|---|---|---|
| | Capacity retention rate (%) | Resistance increase rate (%) | Volume increase rate (%) |
| Example 1 | 97.5 | 8.3 | 14.3 |
| Example 2 | 97.0 | 10.3 | 16.3 |
| Example 3 | 96.3 | 11.5 | 21.3 |
| Example 4 | 96.9 | 15.3 | 22.3 |
| Example 5 | 95.0 | 18.3 | 17.3 |
| Example 6 | 93.9 | 19.4 | 18.3 |
| Example 7 | 89.9 | 19.7 | 19.5 |
| Comparative Example 1 | 65.0 | 36.3 | 40.9 |
| Comparative Example 2 | 69.3 | 28.9 | 34.3 |

Referring to Table 1, it can be confirmed that the lithium secondary batteries of Examples 1 to 7 using the non-aqueous electrolyte including the compound represented by Formula 1 have excellent high-temperature storage lifespan performance, low resistance increase rates, and small volume increase when compared to the lithium secondary batteries of Comparative Examples 1 and 2.

## Claims

1. A non-aqueous electrolyte comprising:
a lithium salt;
an organic solvent; and
an additive,
wherein the additive includes a compound represented by Formula 1: 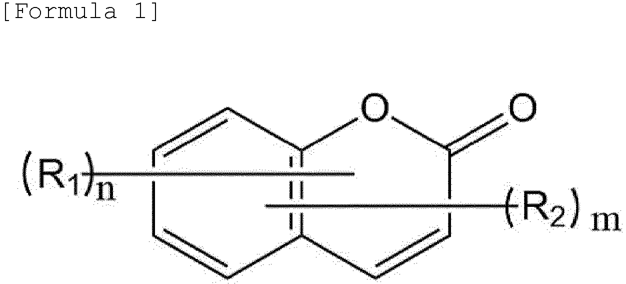
wherein, in Formula 1, R₁ includes a halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group or a combination of two or more thereof, and R₂ is a substituent represented by Formula 2 below or a substituent represented by Formula 3 below: 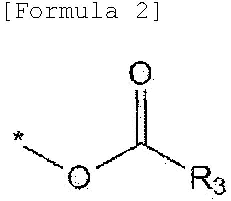
wherein in Formula 2, R₃ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site: 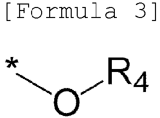
wherein in Formula 3, R₄ is selected from an one or more fluorine substituted alkyl group having 1 to 10 carbon atoms, an one or more fluorine substituted alkenyl group having 1 to 10 carbon atoms, and an one or more fluorine substituted alkynyl group having 1 to 10 carbon atoms, and * is the binding site; and
n is an integer of 0 to 5, m is an integer of 1 to 6, and n+m is an integer of 1 to 6.

2. The non-aqueous electrolyte of claim 1, wherein the compound represented by Formula 1 includes at least one selected from a compound represented by Formula 1-A and a compound represented by Formula 1-B: 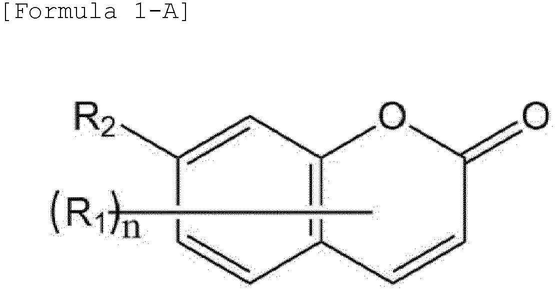 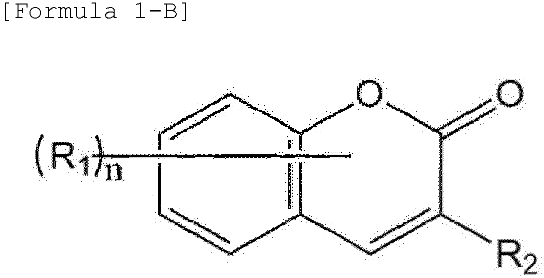 wherein in Formula 1-A and Formula 1-B, the definitions of R₁, R₂, and n are as defined in Formula 1.

3. The non-aqueous electrolyte of claim 1, wherein the compound represented by Formula 1 includes at least one selected from a compound represented by Formula 1-a and a compound represented by Formula 1-b: 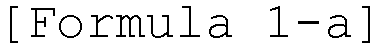 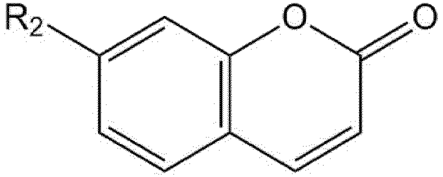 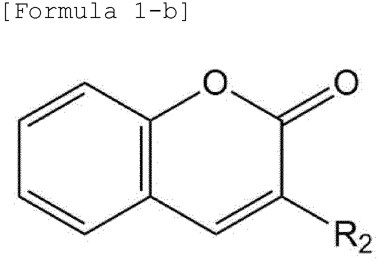 wherein in Formula 1-a and Formula 1-b, the definition of R₂ is as defined in Formula 1.

4. The non-aqueous electrolyte of claim 1, wherein R₃ and R₄ are each selected from a pentafluoroethyl group, a nonafluorobutyl group, and a heptadecafluoroheptyl group.

5. The non-aqueous electrolyte of claim 1, wherein the compound represented by Formula 1 is included in an amount of 0.01 wt% to 5 wt%.

6. The non-aqueous electrolyte of claim 1, wherein the lithium salt includes at least one selected from LiCl, LiBr, LiI, LiBF₄, LiClO₄, LiAlO₄, LiAlCl₄, LiPF₆, LiSbF₆, LiAsF₆, LiB₁₀Cl₁₀, LiBOB(LiB(C₂O₄)₂), LiCF₃SO₃, LiFSI(LiN(SO₂F)₂), LiCH₃SO₃, LiCF₃CO₂, LiCH₃CO₂ and LiBETI (LiN(SO₂CF₂CF₃)₂).

7. The non-aqueous electrolyte of claim 1, wherein the lithium salt is included in a concentration of 0.5 M to 5.0 M in the non-aqueous electrolyte.

8. The non-aqueous electrolyte of claim 1, wherein the organic solvent includes at least one selected from a cyclic carbonate-based organic solvent, a linear carbonate-based organic solvent, a linear ester-based organic solvent and a cyclic ester-based organic solvent.

9. The non-aqueous electrolyte of claim 1, wherein the additive further includes at least one additional additive selected from vinylene carbonate, vinyl ethylene carbonate, fluoroethylene carbonate, propane sultone, propene sultone, succinonitrile, adiponitrile, ethylene sulfate, LiPO₂F₂, lithium difluorooxalatoborate (LiODFB), Lithium bis-(oxalato)borate (LiBOB), 3-trimethoxysilyl-propyl-N-aniline (TMSPa), and Tris(trimethylsilyl) Phosphite (TMSPi).

10. A lithium secondary battery comprising a positive electrode; a negative electrode facing the positive electrode; a separator interposed between the positive electrode and the negative electrode; and the non-aqueous electrolyte of claim 1.
